# EUROPÄISCHE PATENTSCHRIFT

(11) **EP 2 888 481 B1**
(45) Veröffentlichungstag und Bekanntmachung des Hinweises auf die Patenterteilung: **06.01.2021**
(21) Anmeldenummer: 13739705.5
(22) Anmeldetag: 22.07.2013
(51) Int. Cl.: F04C 29/00, F04C 23/02

(54) **VAKUUMPUMPE MIT RIEMENANTRIEB**
VACUUM PUMP
POMPE À VIDE

(30) Priorität: 25.08.2012 DE 202012008133 U
(43) Veröffentlichungstag der Anmeldung: 01.07.2015
(73) Patentinhaber: Leybold GmbH, 50968 Köln (DE)
(72) Erfinder: AUBERT, Jean-Francois, F-07130 Soyons (FR)
(74) Vertreter: dompatent von Kreisler Selting Werner - Partnerschaft von Patent- und Rechtsanwälten mbB
(86) Internationale Anmeldenummer: PCT/EP2013/065389
(87) Internationale Veröffentlichungsnummer: WO 2014/032858

(56) Entgegenhaltungen:
- DE-A1- 10 209 723
- DE-A1-102010 056 393
- DE-T2-602004 003 041
- DE-U1- 20 208 298
- US-A- 569 663
- US-A- 5 057 058

## Beschreibung

Die Erfindung betrifft eine Vakuumpumpe.

Große Vakuumpumpen werden über einen externen nicht im Pumpengehäuse angeordneten Motor angetrieben. Bei großen Vakuumpumpen handelt es sich insbesondere um Drehschieberpumpen mit einem Saugvermögen von mehr als 200m³/h. Ebenso kann es sich bei den Pumpen um Schraubenpumpen oder Rootspumpen handeln, die aufgrund ihrer Größe ebenfalls mit einem externen Motor angetrieben werden. Derartige Pumpen weisen einen Pumpenraum ausbildendes Pumpengehäuse auf. In dem Pumpenraum ist ein Pumpelement, wie ein Rotor, angeordnet und mit einer Rotorwelle verbunden. Bei einer Drehschieberpumpe handelt es sich bei dem Pumpelement um einen exzentrisch im Pumpenraum angeordneten Rotor mit radial in Schlitzen des Rotors angeordneten verschiebbaren Schiebern. Mit der Rotorwelle ist außerhalb des Pumpengehäuses eine Riemenscheibe verbunden. Ferner weist die Vakuumpumpe einen außerhalb des Pumpengehäuses angeordneten Motor auf, auf dessen Antriebswelle eine Antriebsscheibe angeordnet ist. Die Antriebsscheibe ist über einen Riemen mit der Riemenscheibe verbunden. Da sich der Riemen im Betrieb längt, ist ferner ein Spannelement zum Spannen des Riemens vorgesehen. Das Spannelement ist auch zur Montage der Riemenscheibe bzw. Antriebsscheibe erforderlich. Ist bspw. die Riemenscheibe bereits montiert und der Riemen über die Riemenscheibe gelegt, so kann die Antriebsscheibe nur bei gelockertem Riemen montiert werden. Aufgrund dieser Montageanforderung ist das Verwenden längenkonstanter Riemen, d.h. Riemen, die sich im Betrieb nicht längen, nicht möglich.

Eine solche Pumpe ist beispielsweise aus DE 10 2010 056 393 A1 bekannt.

Aus DE 102 09 723 A1 ist dagegen eine mehrteilige Riemenscheibe bekannt, welche zur kombinierten Dämpfung von Schwingungen und zur Spannung des Riemens dient. Aus DE 202 08 298 U1 ist eine mehrteilige Scheibe zur Befestigung eines Riemens als Zugmittel bekannt.

Aufgabe der Erfindung ist es eine Vakuumpumpe mit großer Pumpleistung zu schaffen, bei der auch die Verwendung eines längenkonstanten Riemens möglich ist.

Die Lösung der Erfindung erfolgt erfindungsgemäß durch die Merkmale des Anspruchs 1.

Eine Vakuumpumpe, bei der es sich insbesondere um eine Vakuumpumpe mit großer Pumpleistung, d.h. einem Saugvermögen von mehr als 200m³/h handelt, weist ein Pumpengehäuse auf, das einen Pumpenraum ausbildet. In dem Pumpenraum ist ein Pumpelement angeordnet und mit einer Rotorwelle verbunden. Bei dem Pumpelement kann es sich bspw. um einen Rotor einer Drehschieberpumpe handeln, der exzentrisch im Pumpenraum angeordnet ist und Schieber trägt. Ebenso kann es sich bei einem Pumpelement um einen Rotor einer Schraubenpumpe handeln. Der Antrieb der Rotorwelle erfolgt mithilfe eines externen außerhalb des Pumpengehäuses angeordneten Motors. Hierzu ist mit der Antriebswelle des Motors eine Antriebsscheibe und mit der Rotorwelle eine Riemenscheibe verbunden, wobei die Riemenscheibe außerhalb des Pumpengehäuses angeordnet ist. Zur Kraftübertragung ist ein Riemen vorgesehen, der mit der Antriebsscheibe und der Riemenscheibe verbunden ist. Erfindungsgemäß ist die Antriebsscheibe oder die Riemenscheibe mehrteilig ausgebildet. Hierdurch ist es möglich bei der Montage des Riemens zunächst nur einen Teil der Antriebsscheibe oder der Rotorscheibe zu montieren, respektive einen Teil der Antriebsscheibe oder Rotorscheibe nicht zu montieren. Anschließend kann auf einfache Weise der Riemen aufgelegt werden, da aufgrund der Mehrteiligkeit der Antriebsscheibe und/oder der Riemenscheibe, die noch nicht vollständig montierte Scheibe derart justiert werden kann, dass der Riemen noch nicht gespannt ist. Besteht die Antriebsscheibe bspw. aus zwei Teilen, von dem ein Teil bspw. 100° und der andere Teil 260° der Antriebsscheibe ausmacht, kann bspw. der kleinere der beiden Teile noch nicht montiert werden und die Antriebsscheibe so justiert werden, dass der Riemen über einen Teil des montierten Teils der Antriebsscheibe läuft. Anschließend wird die Antriebsscheibe gedreht bis der Riemen vollständig am Außenumfang des bereits montierten Teils der Antriebsscheibe anliegt und hierdurch gespannt ist. Im nächsten Schritt kann sodann der zweite Teil der Antriebsscheibe montiert werden.

Sind bspw. die beiden Scheiben nebeneinander oder auf derselben Höhe vorgesehen und die Antriebsscheibe auf der linken Seite angeordnet, so wird der erste Teil der Antriebsscheibe, bspw. das 260° des Umfangs ausmachende Teil derart montiert, dass die Außenfläche dieses Teils der Antriebsscheibe an der im Betrieb der Riemen anliegt nach unten weist. Nach dem anschließenden Montieren des Riemens verläuft dieser oberhalb des bereits montierten Teils der Antriebsscheibe frei und somit leicht durchhängend. Die Antriebsscheibe wird nunmehr in Uhrzeigersinn gedreht bis das bereits montierte Teil der Antriebsscheibe bezogen auf die beschriebene Anordnung außen links angeordnet ist. Hierdurch wird der Riemen gespannt. Der zweite Teil der Antriebsscheibe kann somit dann innerhalb des Riemens auf der rechten Seite des bereits montierten Teils der Antriebsscheibe bzw. auf der Seite zwischen der Antriebs- und der Riemenscheibe montiert werden.

Das erfindungsgemäße Vorsehen einer mehrteiligen Antriebs- und/oder mehrteiligen Riemenscheibe hat den Vorteil, dass längenkonstante Riemen verwendet werden können. Hierbei handelt es sich um Riemen, die sich im Betrieb im Wesentlichen nicht längen. Dies hat den wesentlichen Vorteil, dass keine Spannvorrichtung vorgesehen sein muss. Die Spannvorrichtung hat bei bekannten Vakuumpumpen mit Riemenantrieb, sowohl die Funktion den Riemen gespannt zu halten, als auch ein Lockern des Riemens zur Montage zu ermöglichen.

Ein weiterer Vorteil der erfindungsgemäß mehrteiligen Antriebsscheibe und/oder der erfindungsgemäß mehrteiligen Riemenscheibe besteht darin, dass unabhängig von dem Stromnetz, das bspw. 50Hz oder 60Hz aufweist, derselbe Motor für die Pumpe verwendet werden kann. Dies ist dadurch möglich, dass eine konstante Pumpendrehzahl dadurch realisiert wird, das der Durchmesser der Antriebsscheibe oder der Riemenscheibe entsprechend angepasst wird. Dies ist zwar auch bei bekannten Pumpen möglich, jedoch ist bspw. ein Umrüsten äußerst aufwendig. Bei erfindungsgemäßen Vakuumpumpen ist zur Umrüstung lediglich ein Austausch der geteilten Scheibe und das Vorsehen eines Riemens entsprechender Länge notwendig. Dies hat insbesondere in der Fertigung den Vorteil, dass erst unmittelbar vor der Endmontage entschieden werden muss, ob die Pumpe für ein Stromnetz mit 50Hz oder 60Hz eingesetzt wird. Sofern sowohl die Antriebsscheibe als auch die Riemenscheibe ausgewechselt werden, können die Durchmesser derart aufeinander abgestimmt werden, dass stets dieselben Riemen verwendet werden können.

In besonders bevorzugter Ausführungsform sind die Antriebsscheibe und/oder die Riemenscheibe zweitteilig aufgebaut. Dies hat den Vorteil, dass die Montage gegenüber einteiligen oder mehrteiligen Scheiben vereinfacht ist.

Erfindungsgemäß weist die geteilte Scheibe ein Halteteil auf, das die Wellenaufnahme umfasst. Die Verbindung zwischen der geteilten Scheibe und der entsprechenden Welle erfolgt somit insbesondere ausschließlich über diese Wellenaufnahme. Die Verbindung zwischen der Scheibe und der Welle ist somit durch das Halteteil realisiert. Das oder die weiteren Teile der entsprechenden Scheibe werden sodann nur noch mit dem Halteteil verbunden und dienen nicht mehr zur Fixierung der Scheibe an der Welle. Hierdurch wird die Montage vereinfacht, da nach der Montage des Halteteils auf der Welle bereits eine sichere Verbindung mit der Welle hergestellt ist.

Ferner weist die geteilte Scheibe, d.h. die Antriebsscheibe oder die Rotorscheibe in einer weiteren bevorzugten Ausführungsform ein Verbindungsteil mit kreissegmentförmigen Querschnitt auf. Dieses Verbindungsteil wird insbesondere mit dem Halteteil verbunden, sodass in besonders bevorzugter Ausführungsform eine zweitteilige Scheibe aus einem Halteteil und einen Verbindungsteil hergestellt ist.

Ein Verbindungsteil, das vorzugsweise einen kreissegmentförmigen Querschnitt aufweist, jedoch einen anderen Querschnitt aufweisen kann und das Halteteil, das vorzugsweise die Wellenaufnahme aufweist, weisen jeweils zur Verbindung miteinander ein Verbindungselement auf. Die beiden Verbindungselemente bilden einen Verbindungssteg. Dieser verläuft vorzugsweise entsprechend einer Sekante eines Kreises. Der Verbindungssteg ist somit vorzugsweise außerhalb der Wellenaufnahme angeordnet und verläuft nicht durch den Mittelpunkt. Um eine möglichst einfache Montage zu realisieren, verlaufen die beiden Verbindungselemente zueinander parallel. Die Verbindung der beiden Verbindungselemente erfolgt vorzugsweise über Fixierelemente, wie Schrauben oder dergleichen. Der Riemen ist vorzugsweise als Flachband ausgebildet und im Betrieb längenkonstant.

Vorzugsweise weisen die Riemen im Querschnitt mehrere parallel zueinander verlaufende Wulste und Rillen auf, die mit entsprechenden Rillen und Wulsten in den Umfangsflächen der Riemenscheibe und der Antriebsscheibe zusammenwirken.

Bei der erfindungsgemäßen Vakuumpumpe handelt es sich in besonders bevorzugter Ausführungsform um eine Drehschieberpumpe mit großer Pumpenleistung, insbesondere eine einstufige Drehschieberpumpe mit einem Saugvermögen von mehr als 200m³/h.

Nachfolgend wird die Erfindung anhand einer bevorzugten Ausführungsform unter Bezugnahme auf die anliegenden Zeichnungen näher erläutert.

### Es zeigen:

- Fig. 1: eine schematische Draufsicht einer Vakuumpumpe mit Riemenantrieb,
- Fig. 2: eine schematische Draufsicht einer geteilten Antriebsscheibe und
- Fig. 3 und 4: eine schematische Vorderansicht des Riementriebs in unterschiedlichen Montagepositionen.

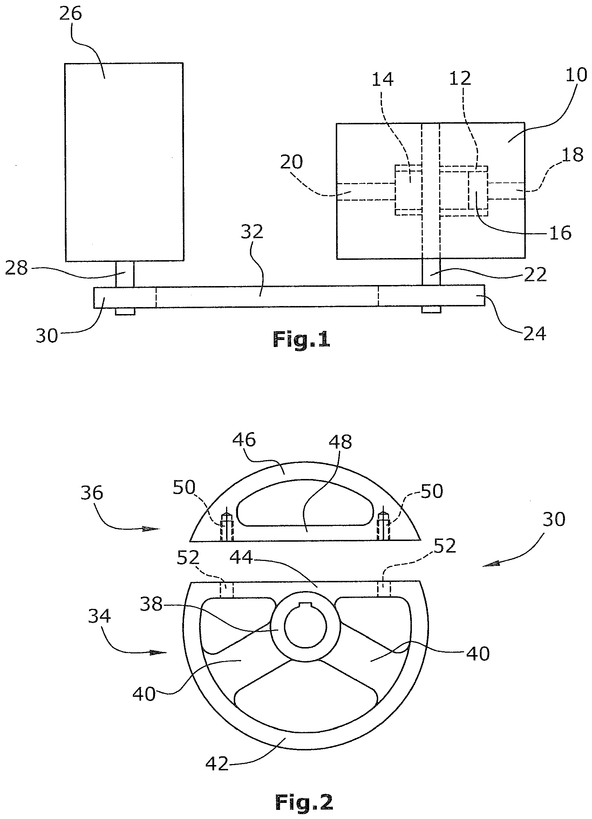

Eine Vakuumpumpe wie eine Drehschieberpumpe weist ein Pumpengehäuse 10 auf. Innerhalb des Pumpengehäuses ist in Fig. 1 stark schematisch vereinfacht, ein Pumpenraum 12 ausgebildet. In dem Pumpenraum 12 ist ein Pumpelement 14 in Form eines Rotors angeordnet. Der bezogen auf die Mittellinie des Pumpraums exzentrisch angeordnete Rotor 14 trägt radial verschiebbare Schieber 16. Aufgrund der radialen Verschiebbarkeit der Schieber 16 entstehen mehrerer Kammern, deren Volumen sich aufgrund der Drehung des Pumpelements 14 verringert. Hierdurch wird durch einen Einlass 18 in eine große Pumpkammer Gas eingesaugt, das sodann komprimiert wird und durch einen Auslass 20 ausgestoßen wird.

Das Pumpelement wird von einer Rotorwelle 22 getragen und durch die Rotorwelle 22 angetrieben. Die Rotorwelle 22 führt aus dem Pumpengehäuse 10 heraus und trägt eine Riemenscheibe 24.

Ferner ist ein außerhalb des Gehäuses 10 angeordneter Motor 26 vorgesehen, dessen Antriebswelle 28 eine Antriebsscheibe 30 trägt. Von der Antriebsscheibe 30 wird die Drehbewegung mithilfe eines Riemens 32 auf die Riemenscheibe 24 übertragen.

Erfindungsgemäß sind die Antriebsscheibe 30 und/oder die Riemenscheibe 24 mehrteilig ausgebildet. In Fig. 2 ist eine zweitteilige Scheibe, bei der es sich bspw. um eine Antriebsscheibe 30 handelt dargestellt. Die Antriebsscheibe 30 ist zweitteilig und besteht aus einem Halteteil 34 sowie einem in Draufsicht einen kreissegmentförmigen Querschnitt aufweisenden Verbindungsteil 36.

Ein Aspekt der Erfindung besteht darin, dass die Verbindung zwischen dem Halteteil und der entsprechend zugehörigen Welle 22 oder 28 über eine Wellenaufnahme 38 erfolgt, die vollständig in das Halteteil integriert ist. Die Verbindung zwischen der Scheibe, im dargestellten Ausführungsbeispiel der Antriebsscheibe 30, und der entsprechenden Welle erfolgt ausschließlich über die in das Halteteil 34 integrierte Wellenaufnahme 38. Die Wellenaufnahme 38 ist über im Wesentlichen radial verlaufende Stege 40 mit einem Teil-Umfangsring 42 verbunden. Ferner weist das Halteteil 34 ein als Kreissekante ausgebildetes Verbindungselement 44 auf. Dieses ist derart angeordnet, dass es außerhalb der Wellenaufnahme 34 angeordnet ist. Mit anderen Worten die Wellenaufnahme 34 ist innerhalb des Teilrings 42 sowie des Verbindungselement 44 angeordnet.

Das Verbindungsteil 36 weist in Draufsicht einen kreissegmentförmigen Querschnitt auf. Das Verbindungsteil 42 weist einen ebenfalls Teil-Umfangsring 46 auf. Dieser ist mit einem Verbindungselement 48 verbunden. Das Verbindungselement 48 ist entsprechend dem Verbindungselement 44 als Kreissekant ausgebildet. Die beiden Verbindungselemente 44, 48 bilden einen Verbindungssteg aus. Da die Verbindungselemente 44,48 in der dargestellten Ausführungsform parallel zueinander ausgebildet sind, können diese auf einfache Weise durch ggf. mit einem Gewinde versehene Bohrungen 50 bzw. 52 und nicht dargestellte Fixierelemente, wie Schrauben, miteinander verbunden werden.

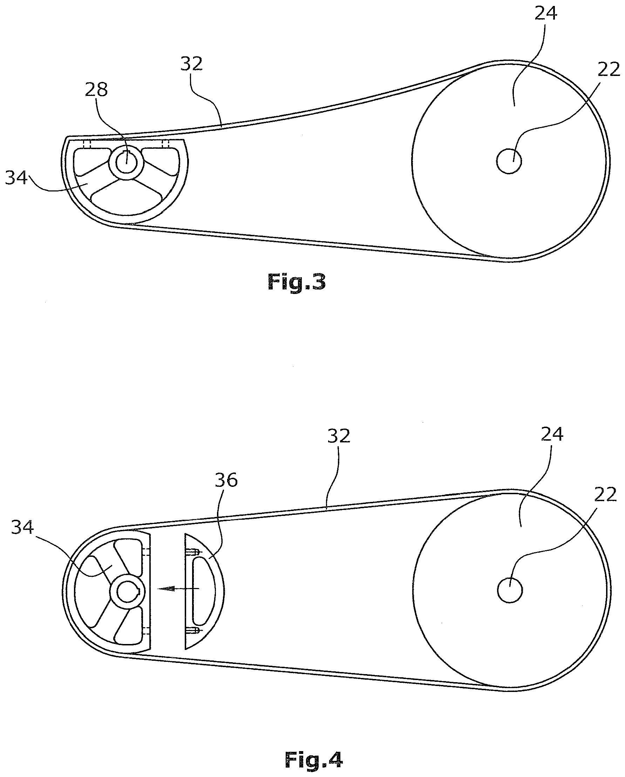

Die durch die erfindungsgemäße Ausführung der Vakuumpumpe ermöglichte Montage, bei der es aufgrund der mehrteiligen Ausgestaltung der Antriebsscheibe 30 und/oder Riemenscheibe 24 nicht mehr erforderlich ist eine Spannvorrichtung vorzusehen, wird nachfolgend anhand der Figuren 3 und 4 beschrieben.

Zur Montage kann bspw. eine einteilige Riemenscheibe 24 im ersten Schritt (Fig. 3) auf die Rotorwelle 22 montiert werden. Im nächsten Schritt wird das Halteteil 34 der Antriebsscheibe 30 auf die Antriebswelle 28 montiert. Anschließend kann der Riemen 32 aufgelegt werden. Dieser hängt aufgrund der Anordnung des Halteteils 34 durch und kann auf einfache Weise aufgelegt werden. Auch ggf. vorgesehene in Längsrichtung des Riemens 32 verlaufende Wulste und entsprechende Ausnehmungen in den Scheiben 24,30 sind hierbei nicht störend.

Im nächsten Schritt wird das Halteteil 34 in die in Fig. 4 dargestellte Stellung gedreht. Hierbei erfolgt automatisch ein Spannen des Riemens 32. Eine Spannvorrichtung ist hierfür nicht erforderlich. Anschließend kann auf einfache Weise von innen, d.h. in einer Position innerhalb des Riemens 32, das Verbindungsteil 36 montiert werden, sodass die Antriebsscheibe 30 montiert ist.

Durch entsprechende Montageschritte und Auswechseln der einen oder beider Scheiben 30,24 kann bspw. die Anpassung an unterschiedliche Stromnetze erfolgen.

## Patentansprüche

1. Vakuumpumpe, insbesondere mit großer Pumpleistung, mit einem einen Pumpenraum (12) ausbildenden Pumpengehäuse (10), einem mit einer Rotorwelle (22) verbundenen Pumpelement (14), einem mit der Rotorwelle (22) außerhalb des Pumpengehäuses (10) verbundenen Riemenscheibe (24) und
einen außerhalb des Pumpengehäuses (10) angeordneten Motor (26) auf dessen Antriebswelle (28) eine über einen Riemen (32) mit der Riemenscheibe (24) verbundene Antriebsscheibe (30) angeordnet ist,
**dadurch gekennzeichnet, dass**
die Antriebsscheibe (30) und/oder die Riemenscheibe (24) mehrteilig ausgebildet ist und wobei die Antriebsscheibe und/ oder die Riemenscheibe ein Halteteil (34) aufweist, wobei das Halteteil (34) der Antriebsscheibe (30) und/oder der Riemenscheibe (24) eine Wellenaufnahme (38) aufweist und die Antriebsscheibe (30) und/oder die Riemenscheibe (24) ausschließlich mittels der Wellenaufnahme (38) des Halteteils (34) mit der Antriebswelle (28) bzw. der Rotorwelle (22) verbunden ist, so dass es möglich ist, bei der Montage des Riemens zunächst nur einen Teil der Antriebsscheibe oder der Rotorscheibe zu montieren, respektive einen Teil der Antriebsscheibe oder Rotorscheibe nicht zu montieren, und anschließend auf einfache Weise der Riemen aufgelegt werden kann, da aufgrund der Mehrteiligkeit der Antriebsscheibe und/oder der Riemenscheibe, die noch nicht vollständig montierte Scheibe derart justiert werden kann, dass der Riemen noch nicht gespannt ist.

2. Vakuumpumpe nach Anspruch 1, **dadurch gekennzeichnet, dass** die Antriebsscheibe (30) und/oder die Riemenscheibe (24) zweiteilig ausgebildet ist.

3. Vakuumpumpe nach einem der Ansprüche 1 oder 2, **dadurch gekennzeichnet, dass** die Antriebsscheibe (30) und/oder die Riemenscheibe (34) ein Verbindungsteil (36) mit kreissegmentförmigem Querschnitt aufweist.

4. Vakuumpumpe nach einem der Ansprüche 1 bis 3, **dadurch gekennzeichnet, dass** ein Verbindungsteil (36) und ein Halteteil (34) zur Verbindung miteinander jeweils ein Verbindungselement (44,48) aufweist, die einen Verbindungssteg ausbilden.

5. Vakuumpumpe nach Anspruch 4, **dadurch gekennzeichnet, dass** der Verbindungssteg außerhalb der Wellenaufnahme (38) verläuft und insbesondere entsprechend einer Kreissekante ausgebildet ist.

6. Vakuumpumpe nach Anspruch 4 oder 5, **dadurch gekennzeichnet, dass** die Verbindungselemente (44,48) zueinander parallel verlaufen und vorzugsweise über Fixierelemente miteinander verbunden sind.

7. Vakuumpumpe nach einem der Ansprüche 1 bis 6, **dadurch gekennzeichnet, dass** der Riemen (32) als Flachband ausgebildet ist.

8. Vakuumpumpe nach einem der Ansprüche 1 bis 7, **dadurch gekennzeichnet, dass** der Riemen (32) im Betrieb längenkonstant ist.

## Claims

1. A vacuum pump, in particular with a high pumping capacity, comprising
a pump housing (10) defining a pump chamber (12),
a pumping element (14) connected with a rotor shaft (22),
a belt pulley (24) connected with the rotor shaft (22) outside the pump housing (10), und
a motor (26) arranged outside the pump housing (10), the drive shaft (28) thereof being provided with a drive pulley (30) that is connected with the belt pulley (24) via a belt (32),
**characterized in that**
the drive pulley (30) and/or the belt pulley (24) are of a multipart structure and wherein the drive pulley (30) and/or the belt pulley (24) comprises a holding part (34), wherein the holding part (34) of the drive pulley (30) and/or the belt pulley (24) comprises a shaft receiving means (38) and the drive pulley (30) and/or the belt pulley (24) is connected with the drive shaft (28) or the rotor shaft (2) exclusively via the shaft receiving means (38) of the holding part (34), so that, when mounting the belt, it is possible to first mount only a part of the drive pulley or of the rotor pulley or, respectively, not to mount a part of the drive pulley or the rotor pulley, and that thereafter, the belt can be placed in a simple manner, since, due to the multipart nature of the drive pulley and/or the belt pulley, the pulley not yet fully mounted can be adjusted such that the belt is not yet tensioned.

2. The vacuum pump of claim 1, **characterized in that** the drive pulley (30) and/or the belt pulley (24) are of a two-part design.

3. The vacuum pump of claim 1 or 2, **characterized in that** the drive pulley (30) and/or the belt pulley (34) comprise a connecting part (36) with a circular segment-shaped cross section.

4. The vacuum pump of one of claims 1 to 3, **characterized in that**, for connection with each other, a connecting part (36) and a holding part (34) each comprise a connecting element (44, 48) which form a connecting web.

5. The vacuum pump of claim 4, **characterized in that** the connecting web extends outside the shaft receiving means (38) and is formed in particular in a manner corresponding to a secant of a circle.

6. The vacuum pump of claim 4 or 5, **characterized in that** the connecting elements (44, 48) extend in parallel with each other and are preferably connected with each other by means of fixing elements.

7. The vacuum pump of one of claims 1 to 6, **characterized in that** the belt (32) is in the form of a flat belt.

8. The vacuum pump of one of claims 1 to 7, **characterized in that** the belt (32) is length-constant in operation.

## Revendications

1. Pompe à vide, en particulier à haute capacité de pompage, avec un corps de pompe (10) formant une chambre de pompage (12),
un élément de pompage (14) connecté à un arbre de rotor (22),
une poulie à courroie (24) connectée à l'arbre de rotor (22) à l'extérieur du corps de pompe (10), et
un moteur (26) disposé à l'extérieur du corps de pompe (10), sur l'arbre d'entraînement (28) duquel est disposée une poulie d'entraînement (30) connectée, par l'intermédiaire d'une courroie (32), à la poulie à courroie (24),
**caractérisé par le fait que**
la poulie d'entraînement (30) et/ou la poulie à courroie (24) est réalisée en plusieurs pièces et que la poulie d'entraînement et/ou la poulie à courroie présente une partie de maintien (34), où la partie de maintien (34) de la poulie d'entraînement (30) et/ou de la poulie à courroie (24) présente un logement d'arbre (38) et la poulie d'entraînement (30) et/ou la poulie à courroie (24) est connectée exclusivement au moyen du logement d'arbre (38) de la partie de maintien (34) à l'arbre d'entraînement (28) ou à l'arbre de rotor (22), de sorte qu'il soit possible, lors du montage de la courroie, de monter tout d'abord uniquement une partie de la poulie d'entraînement ou du disque de rotor, respectivement de ne pas monter une partie de la poulie d'entraînement ou du disque de rotor, et qu'ensuite la courroie puisse être placée de manière simple, étant donné que, du fait de la réalisation en plusieurs pièces de la poulie d'entraînement et/ou de la poulie à courroie, la poulie non encore montée complètement peut être réglée de sorte que la courroie ne soit pas encore tendue.

2. Pompe à vide selon la revendication 1, **caractérisée par le fait que** la poulie d'entraînement (30) et/ou la poulie à courroie (24) est réalisée en deux pièces.

3. Pompe à vide selon l'une des revendications 1 ou 2, **caractérisée par le fait que** la poulie d'entraînement (30) et/ou la poulie à courroie (34) présente une partie de connexion (36) de section transversale en forme de segment circulaire.

4. Pompe à vide selon l'une des revendications 1 à 3, **caractérisée par le fait qu'**une partie de connexion (36) et une partie de maintien (34) présentent, chacune, pour la connexion de l'une à l'autre, un élément de connexion (44, 48), lesquels forment une bretelle de connexion.

5. Pompe à vide selon la revendication 4, **caractérisée par le fait que** la bretelle de connexion s'étend à l'extérieur du logement d'arbre (38) et est conçue en particulier selon une sécante circulaire.

6. Pompe à vide selon la revendication 4 ou 5, **caractérisée par le fait que** les éléments de connexion (44, 48) s'étendent parallèles entre eux et sont connectés l'un à l'autre de préférence par l'intermédiaire d'éléments de fixation.

7. Pompe à vide selon l'une des revendications 1 à 6, **caractérisée par le fait que** la courroie (32) est réalisée sous forme de courroie plate.

8. Pompe à vide selon l'une des revendications 1 à 7, **caractérisée par le fait que** la courroie (32) est, en fonctionnement, de longueur constante.
